# EUROPEAN PATENT SPECIFICATION

(11) **EP 4 045 966 B1**
(45) Date of publication and mention of the grant of the patent: **18.06.2025**
(21) Application number: 20788839.7
(22) Date of filing: 15.10.2020
(51) Int. Cl.: G02F 1/00, G02B 5/28, G02F 1/35, A61F 9/02

(54) **OPTICAL STRUCTURE AND METHOD OF MANUFACTURING IT**
NICHTLINEARE OPTISCHE STRUKTUR
STRUCTURE OPTIQUE NON LINÉAIRE

(30) Priority: 17.10.2019 EP 19290104
(43) Date of publication of application: 24.08.2022
(73) Proprietor: Université Claude Bernard Lyon 1, 69100 Villeurbanne (FR); Centre National de la Recherche Scientifique (CNRS), 75016 Paris (FR); Ecole Normale Supérieure de Lyon, 69007 Lyon (FR)
(72) Inventor: PAROLA, Stéphane, 69330 Jonage (FR); LOPES, Cesar, 58334 Linköping (SE); CHATEAU, Denis, 69008 Lyon (FR); CHAPUT, Frédéric, 69100 Villeurbanne (FR)
(74) Representative: Regimbeau
(86) International application number: PCT/EP2020/079099
(87) International publication number: WO 2021/074324

(56) References cited:
- WO-A1-2011/128338
- WO-A2-03/029893
- US-A1- 2010 166 368
- US-A1- 2010 213 356
- US-A1- 2011 170 159
- US-A1- 2012 002 312
- US-A1- 2014 233 085

## Description

### Background of the invention

In the field of nonlinear optics, research has been carried out for several years on hybrid materials with non-linear optical properties, in particular for optical limitation applications. These materials are of particular interest when used in optical protection devices (eye, sensors) to prevent damage resulting from laser radiation, the latter being up sharply due to the strong development of technologies associated with lasers.

The advantage of non-linear absorption phenomena lies in the fact that the molecules or materials endowed with these properties react spontaneously under irradiation with very short response times, or reaction times, and very wide wavelength ranges, for example the whole visible or infra-red range for the same material. Commercial filters, on the other hand, have a narrow wavelength protection band due to linear blocking of light. As lasers today easily can change emitted wavelength, commercial linear blocking filters are becoming obsolete.

One type of hybrid material with known non-linear optical properties comprises a silicated based matrix incorporating molecules, complexes and/or nanoparticles. WO 2011/128338 describes in this respect a method for the preparation of such a hybrid material by condensation of a silicate sol, that is to say a sol comprising oligomers of silicon oxide, according to the sol-gel method. However, the optical and mechanical properties of such a material often degrade rapidly, so that these materials do not always provide optimal protection of an optical sensor within a nonlinear optical device.

US 2014/233085 A1 discloses an optical limiter. The optical limiter comprises a glass backing, a glass cover, and a layer of a phase changing material placed between said glass backing and said glass cover. The phase changing material comprises a transparent matrix having embedded particles of material that changes its optical properties due to temperature induced phase change of said material.

### Summary of the invention

It is an object of the invention to provide an optical structure with non-linear optical properties to overcome the disadvantages described above.

The invention aims in particular to provide such an optical structure having improved optical and mechanical properties compared to the optical structures of the state of the art.

To this end, according to one aspect, the invention proposes an optical structure comprising at least one stack comprising a central filter and two optical elements between which said central filter is interposed. Said central filter is in a matrix material, said matrix material being doped with at least one doping agent. The central filter and the two optical elements on either side thereof are assembled by bonding layers of a material based on the same as the matrix material as to that of the central filter, the optical elements on either side of the central filter and the bonding layers each having a refractive index equal to that of the material of the central filter or only differing from this refractive index within a range of plus or minus 0.05, preferably within a range of plus or minus 0.02.

The doping agent is an optical limiting doping agent, i.e. is a power limiting agent. The doping agent in combination with the optical elements of the optical structure is such that it limits power transmission. The doping agent imparts a power transmission threshold (protection threshold mentioned below) to the structure.

Such an optical structure may be used as protective structure or protective device. It can be used to protect another device or eyes from a laser radiation, for example.

The optical structural has non-linear optical properties, which are defined by the fact that the higher the energy input is, the higher the absorption of energy by the structure is. The percentage of energy absorption of the structure increases with the energy input.

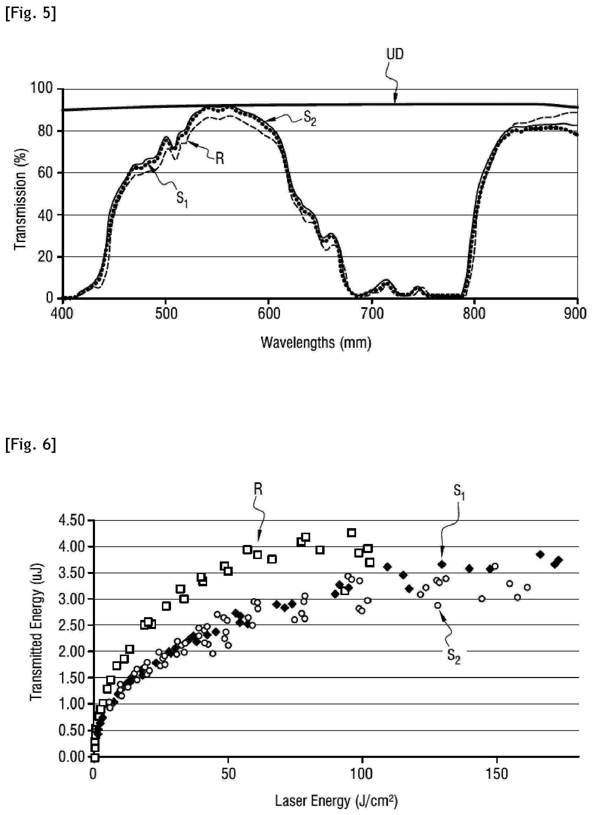

Surprisingly, such a structure according to the invention improves significantly the protection threshold (as shown below from figure 6) in comparison to a case having only the central filter without the optical elements. It also improves both the transmission of wavelengths of low energy in a transmission window of wavelengths (as shown below from figure 5), and has a higher Laser Induced Damage Threshold in comparison to the case having only the central filter without the optical elements.

Furthermore, such a structure in which a doped material is interposed between two optical elements makes it possible to limit the diffusion of oxygen in the doped material and to ensure better beam focusing.

In addition, it avoids the darkening of the doped material that may be encountered with certain adhesives in case of dopants sensitive to the substances contained in the adhesives.

It thus provides a structure with excellent optical properties and limited optical losses since the index between the doped material and the adhesive is identical, or at least has a low gradient of difference.

According to an embodiment of the invention, the optical structure has nonlinear optical properties.

According to an embodiment of the invention, the matrix material is a sol-gel matrix material. In this embodiment, the material of the central filter is a sol-gel matrix material in which is(are) incorporated the doping agent(s).

According to an embodiment of the invention, the sol-gel matrix material being doped with the doping agent(s) of the central filter is a hybrid or inorganic polymer obtained by inorganic polymerisation of a base precursor material in presence of the doping agent(s).

According to an embodiment of the invention, the matrix material may be a silicon oxyde based matrix.

According to an embodiment of the invention, the sol-gel matrix material doped with the doping agent(s) of the central filter is a material made by condensation of a silicon-based sol (silicone oxyde based material), that is to say a sol comprising oligomers of silicon oxide, in presence of the doping agent(s).

For example, the sol-gel matrix material being doped by the doping agent(s) of the central filter is obtained by the following steps. A sol of oligomers of silicon oxide and of the doping agent(s) is dispersed in a solvent and is liquid at low temperature or ambient temperature. Then the sol is condensed to form a gel. The solvent is then extracted to obtain the solid material.

According to an embodiment of the invention, there may be several doping agents in the central filter.

According to an embodiment of the invention, at least a front face of the structure is covered with an anti-reflective layer.

According to an embodiment of the invention, the stack comprising the central filter and the two optical elements between which said central filter is interposed, is sandwiched between two silica glasses, among which at least the front glass is covered with the anti-reflective layer.

According to an embodiment of the invention, the central filter and the optical elements between which it is interposed are each between 0.5 mm and 10 mm thick, advantageously between 0.75 mm and 3 mm.

According to an embodiment of the invention, the doping agent is such that the optical structure has a transmitted energy lower than 3 µJ for an energy input of 50 J/cm².

According to an embodiment of the invention, the doping agent is such that the optical structure limits transmitted energy to lower than 3.5 µJ.

According to an embodiment of the invention, the doping agent is such that the optical structure limits transmitted energy to lower thar 3.5 µJ for an energy input of 0 to 100 J/cm².

According to an embodiment of the invention, the doping agent is such that the optical structure has a Laser Induced Damage Threshold higher than 150 J/cm², or higher than 200 J/cm².

According to an embodiment of the invention, the doping agent has a doping concentration of 0.1 to 500 mM, or of 0.1 to 100 mM, or of 1 to 100 mM.

According to an embodiment of the invention, for a transmission window of wavelengths of visible light the doping agent has a doping concentration of 5 mM to 500 mM and more preferably from 10 mM to 70 mM.

According to an embodiment of the invention, for a transmission window of wavelengths of near-infrared the doping agent has a doping concentration of 1 mM to 500 mM and more preferably from 1 mM to 100 mM.

According to an embodiment of the invention, the doping agent has a doping concentration of 20 mM to 50 mM, or of 30 mM to 50 mM for a base material of silicon oxyde in the matrix material of the central filter.

According to an embodiment of the invention, the optical elements between which the central filter is interposed are in an undoped material.

According to an embodiment of the invention, the optical elements between which the central filter is interposed are in an undoped material based on the same matrix material as that of the central filter, i.e. without the doping agent(s). The above embodiments described may then apply to the material of the optical elements but without the doping agent(s). Especially, the optical elements may be in the same sol-gel material as the central filter but without the doping agent(s).

According to an embodiment of the invention, the optical elements between which the central filter is interposed are in an undoped material of fused silica glass.

According to an embodiment of the invention, the sol-gel matrix of the central filter and of the bonding layers is preferably selected within the following group of materials: methyltrimethoxysilane (MTMOS), methyltriethoxysilane (MTEOS), ethyltriethoxysilane (ETEOS), dimethyldimethoxysilane (DMDMOS), phenyltrimethoxysilane (PTMOS) , dimethyldiethoxysilane (DMDEOS), (3-Glycidyloxypropyl)trimethoxysilane (GLYMO), (3-Glycidoxypropyl) methyldimethoxysilane (GLYDMO), 2-(3,4-Epoxycyclohexyl)ethyltrimethoxysilane, 2-(3,4-Epoxycyclohexyl)ethyl(methyl)dimethoxysilane, diethoxymethylsilane (HMDEOS), phenyltriethoxysilane (PTEOS), vinyltriethoxysilane (VTEOS), (3-Glycidyloxypropyl)trimethoxysilane (GLYEO), (3-Glycidoxypropyl) methyldiethoxysilane (GLYDEO), 2-(3,4-Epoxycyclohexyl) ethyl(methyl)diethoxysilane and 2-(3,4-Epoxycyclohexyl)ethyltriethoxysilane, and their mixtures, advantageously methyltriethoxysilane (MTEOS), ethyltriethoxysilane (ETEOS) and their mixtures.

The sol-gel matrix of the bonding layers can for example be methyltriethoxysilane (MTEOS), with a concentration of methyltriethoxysilane (MTEOS) in its solvent higher than 80% in weight, advantageously between 82 to 90 % in weight.

The doping agent can be any functional entity that will confer specific optical properties of limitation of power transmission to the material.

According to an embodiment of the invention,, the doping agent is a visible and/or Near Infra-Red photochromic and/or optical power limiting agent.

Photochromic agents and optical power limiting agents are examples of such doping agents. The doping agents may be chosen among organic, organometallic or inorganic molecular species, as well as among inorganic nanomaterials. The solubility of the organic or organometallic doping agents incorporated must be high enough in the solvent that is compatible with the sol. In some cases, supplementary quantities of solvent are introduced in the sol to completely dissolve the organic or organo-metallic doping agent. Increasing temperature of the sol can play the same role. Mixtures of doping agents can easily be achieved using this process, even if they present different solubilities.

Of course, the doping agent may be other than the examples described.

Depending on the bandwidth to be covered, a single molecule or a mixture of a plurality of molecules can be used to cover all the necessary wavelengths. Typically, a mixture of 2 or 3 doping molecules can be used for large bandwidth in the visible field, whereas a single doping molecule can be contemplated for protection of small bandwidths in the near infrared.

According to an embodiment of the invention, for visible wavelengths, preferred doping agents can be selected within the following group: 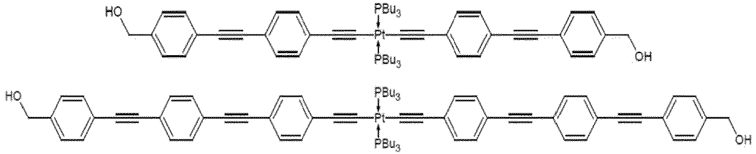 (also named PE2 and PE3 in the following text) or their mixtures.

Other doping agents can be contemplated, such as oligofluorene (for visible wavelengths) or non-linear absorbing chromophores (azabodipy) for wavelengths in the near Infra-Red field, or others.

According to an embodiment of the invention, the central filter and the optical elements between which it is interposed are each between 0.5 mm and 10 mm thick, advantageously between 0.75 mm and 3 mm. They are typically of a thickness equal to 1 or 2 mm.

The invention also proposes a method of manufacturing the optical structure, wherein the central filter and the two optical elements on either side thereof are bonded at a temperature between 45°C to 120°C, advantageously between 50 °C and 70 °C, and under a pressure of between 9.81 kPa to 2,942 kPa ( 0.1 to 30 Kg/cm²), advantageously between 490.33 kPa and 1,961.33 kPa (between 5 and 20Kg/cm²).

According to an embodiment of the invention, said method uses a temperature-regulating press. The central filter and the two optical elements on either side thereof are bonded using a temperature-regulating press.

### Brief description of the drawings

Other characteristics and advantages of the invention appear from the following description of particular embodiments of the invention, given as nonlimiting examples, and with reference to the accompanying drawings, in which:
- Figure 1 is a schematic representation of an optical structure according to the invention;
- Figure 2 presents the transmission spectra obtained with and without antireflective layers;
- Figures 3a and 3b are schematic section views of the optical structure of a first sample used in a comparison test;
- Figures 4a and 4b are schematic section views of the optical structure of a second sample used in said comparison test;
- Figure 5 is a graph on which the transmission curves of the samples of figures 3a, 3b and 4a, 4b are provided;
- Figure 6 provides the transmitted energy versus the laser energy input tested for the same samples at 532 nm wavelength.

### Detailed description of embodiments

### Optical structure

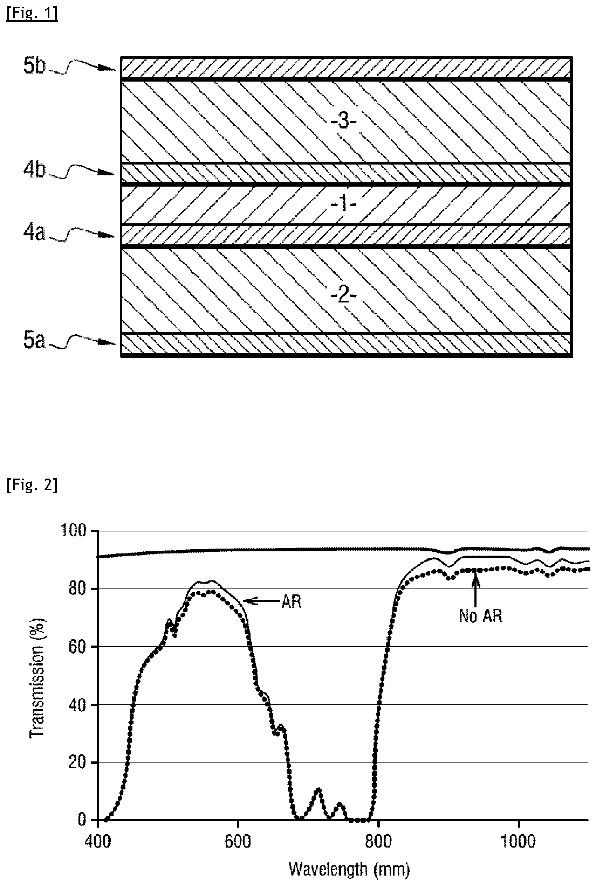

The structure shown in FIG. 1 is a stack comprising:
- a central filter 1,
- sandwiching optical elements 2 and 3 between which the filter 1 is interposed,
- layers of adhesive 4a and 4b interposed between the central filter 1 and, on the one hand, optical element 2 (adhesive layer 4a) and, on the other hand, optical element 3 (adhesive layer 4b),
- anti-reflective layers 5a and 5b deposited on the layers 2 and 3.

The central filter 1 and the optical elements 2 and 3 are for example each of a thickness between 0.5 mm and 10 mm, typically of a thickness of the order of 1 or 2 mm.

For example, the central filter 1 is 1 mm thick, while the two optical elements 2 and 3 are 2 mm thick.

Different diameters are possible for filter 1 and the sandwiching optical elements 2 and 3. By way of example, a typical filter diameter is of the order of 1 cm (2 cm in diameter for example).

### Central filter 1

According to an embodiment of the invention, central filter 1 comprises a silica-based sol-gel matrix, i.e. a matrix material having a base material of silicon oxyde, which incorporates optical chromophores limiting transmission of power.

The matrix allows good transmission properties at visible, NIR or IR wavelengths, whereas the incorporated chromophores are chosen to block either high intensity visible or NIR wavelengths typically from 380 nm and up to 1800 nm.

In the present disclosure, visible wavelengths may be a transmission window of wavelengths from 450 nm to 650 nm, NIR (near infrared radiation) may be a transmission window of wavelengths from 750 nm to 3500 nm, especially in the transmission window of wavelengths of 800 nm to 1700 nm or 1800 nm, especially of 1400 to 1600 nm or around 1500 nm, and IR (infrared) wavelengths may be a transmission window of wavelengths of 750 nm to 15 µm.

### Inorganic matrix

According to an embodiment of the invention, the inorganic matrix is for example of the type described in the previous application WO2011128338. The following monomer materials can be mentioned: methyltrimethoxysilane (MTMOS), methyltriethoxysilane (MTEOS), ethyltriethoxysilane (ETEOS), dimethyldimethoxysilane (DMDMOS), dimethyldiethoxysilane (DMDEOS), diethoxymethylsilane (HMDEOS), phenyltriethoxysilane (PTEOS) and vinyltriethoxysilane (VTEOS).

Mixtures of these materials can also be contemplated.

In an embodiment, the monomer is selected among methyltriethoxysilane, ethyltriethoxysilane and their mixtures.

According to an embodfiment of the invention, the solvent is an alcohol and may be advantageously ethanol.

WO 00/35818 can be consulted for more details.

### Incorporated doping agent

According to an embodiment of the invention, for visible wavelengths, a doping agent limiting transmission of power can be a platinum-based chromophore such as those proposed in WO201128338, for example, a platinum phenylacetylure corresponding to the following formula 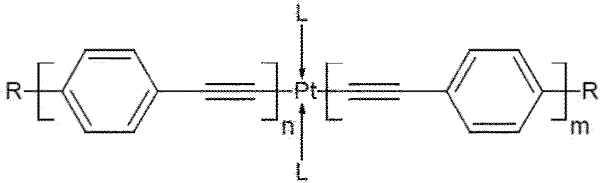 where :
- n and m are chain lengths,
- L denote ligands generally of phosphine type,
- R denotes terminal groups, typically -H, -OH or groups improving solubility as t-Bu3.

Advantageously, n and m are 2 or 3, L is PBu₃ and R is CH₂OH.

According to an embodiment of the invention, the chromophores for the visible range are: 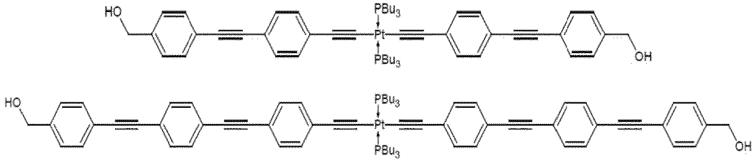 respectively named PE2 and PE3 in all the present text. In an embodiment PE2 is present with PE3. In other embodiments, the central filter is doped with PE2 without PE3. In other embodiments, the central filter is doped with PE3 without PE2.

Typical doping concentrations can be
- from 1 to 500 mM for PE2, preferably from 10 mM to 400 mM and more preferably from 20mM to 70 mM ;
- from 0.1 to 100 mM for PE3, preferably from 1 mM to 50 mM and more preferably from 5mM to 30 mM.

Inorganic matrix with those doped chromophores typically have a high transmittance within the visible domain (between 450-700 nm), as well as good absorption properties in a range between 700 and 800 nm.

Other doping agents can be contemplated, such as oligofluorene (for visible wavelengths).

According to an embodiment of the invention, non-linear absorbing chromophores belonging to the azabodipy family and incorporated into a sol-gel monolithic matrix can also be used for wavelengths in the near Infra-Red region (between 1200 and 1600 nm).

They provide a maximal efficiency around 1300 nm.

Examples of such non-linear chromophores are described in:
"Efficient hybrid materials for optical power limiting at telecommunication wavelengths - Denis Château, Quentin Bellier, Frederic Chaput, Patrick Feneyrou, Gérard Berginc, Olivier Maury, Chantal Andraud and Stephane Parola - Mater. Chem. C, 2014, 2, 5105-5110.

### Optical elements 2 and 3

According to an embodiment of the invention, optical elements 2 and 3 are of a glass material based on the same sol-gel matrix material as that of the central filter.

They are undoped.

Their refractive index equals that of central filter 1 or only differ from it within a range of plus or minus 0.05 (preferably plus or minus 0.02).

### Bonding layers 4a, 4b

The adhesive material used to bond central filter 1 with the two optical elements 2 and 3 is chosen with a refractive index approximately equal to that of the central filter hybrid material plus or minus 0.05, preferably plus or minus 0.02.

Using an identical index between the central filter material and the adhesive material (or at least a low index gradient between the central filter material and the adhesive) helps to limit optical losses and allows a good focusing.

According to an embodiment of the invention, the adhesive material is chosen of the same sol-gel matrix material as that of the central filter 1.

The chromophores which may be present in the central filter 1 might be sensitive to many substances contained in adhesives, causing potential yellowing or even browning of doped materials.

The choice of an adhesive material in the same matrix of sol-gel matrix material as that used for the central filter 1 avoids this problem and allows to obtain very good optical properties (see experimental results here after).

The ellipsometry measurements show the low influence of doping on the refractive index and, therefore, the variations in indices in the assembly are limited.

According to an embodiment of the invention, the sol-gel matrix of the bonding layers is preferably concentrated (at least 80% in weight) to obtain a viscous adhesive, allowing adherence at low temperature.

### Anti-reflective layers 5a, 5b

According to an embodiment of the invention, anti-reflective layers 5a, 5b can be of classical antireflective compounds such as those described and proposed in WO2009133264.

According to an embodiment of the invention, they can also be coatings obtained through sol-gel techniques, the mineral alkoxide which is used being for example a tetraalkoxysilane, preferably tetramethoxysilane (acronym TMOS), and/or else further a tetraethoxysiiane (or TEOS) as proposed in WO2010034936.

According to an embodiment of the invention, they are advantageously provided - as shown in Figure 1 - on each of the free faces of the stacking that constitutes the optical structure.

In a possible embodiment, only the front face of the structure has an antireflective layer (as it is the one which is the most submitted to potential damages).

### Assembly process

The following describes assembly examples for an optical structure of the type here above mentioned.

According to an embodiment of the invention, in these examples, optical elements 2 and 3 and bonding layers 4a, 4b are in MTEOS, while the central filter 1 contains a mixture of PE2 and PE3 dopants (MTEOS doped PE2 50 mM and PE3 10 mM).

According to an embodiment of the invention, bonding layers 4a and 4b are made from a sol-gel matrix of MTEOS, which is concentrated 96% in mass in ethanol by vacuum evaporation and solvent change.

According to an embodiment of the invention, this sol-gel matrix is used as adhesive to assemble optical elements 2 and 3 to filter 1 (bonding layers 4a, 4b).

According to an embodiment of the invention, a pressure of about 60 g/cm² is applied for 72 hours at 45°C to ensure adhesion.

Alternatively, in another implementation, the bonding occurs :
- at higher temperatures to allow faster drying of the adhesive and
- at greater pressure so that the layers of adhesive are thinner.

A press with temperature control is used to ensure reproducibility.

This press is, for example, a manual press.

It allows a controlled pressing at a temperature between 50°C to 70°C, advantageously between 55 ° C and 65 °C, typically 60 °C, which permits a rapid evaporation of ethanol which is the solvent of the MTEOS matrix used.

The bonding pressure is much greater than the conventional bonding pressure and is typically between 9.81 kPa and 2942 kPa (between 0.1 and 30 Kg/cm²), advantageously between 980.66 kPa and 1,961.33 kPa (between 10 and 20 Kg/cm²).

It will be noted in general that the proposed inorganic matrices - and in particular the matrices of MTEOS - have a very good mechanical strength under pressure. The matrices of MTEOS support up to 2T / cm² pressures.

Such a bonding makes it possible to obtain bonded materials, with a good transparency in the visible wavelengths, and especially to achieve the assembly of the filter and the sandwiching optical elements simultaneously in only 1h30, i.e. a time saving of 6 days.

Other adhesive compositions are possible, especially glues with a lower concentration in the gel.

According to an embodiment of the invention, typically, for MTEOS matrices, the concentration in ethanol can be between 82% and 90% (86% +/- 4%).

This makes it possible to work under the conditions indicated above with a better distribution of the adhesive.

The bonding at high pressure limits the risk of cracks due to the formation of bubbles in the material.

According to an embodiment of the invention, the anti-reflective layer or layers 5a, 5b are deposited in a conventional manner, by prior deposition on the layers 2 and/or 3.

In an alternative embodiment, the stack comprising filter 1 and bonded optical elements 2 and 3 between which filter 1 is interposed can be sandwiched between neutral silica glasses. Among the two sandwiching glasses, at least the front surface of the front glass is covered by an anti-reflective layer.

### Experimental results

The structures thus manufactured have a very good optical quality.

They allow excellent results in optical limitation of power transmission, with a substantive improvement of the overall performance of the system.

Two examples S1 and S2 described below of an optical structure according to the invention have been tested in comparison to a reference sample R of prior art (described below).

A better protection threshold of transmitted energy for the optical structure according to the invention has been noted, together with a higher Laser Induced Damage Threshold. The global transmission quality is also improved.

The transmission losses are very low (at most of the order of 0.5% in the visible range) between the doped material and the assembly which is five times thicker. This shows the good behavior of the bonding layers as well as the excellent transparency of undoped materials.

FIG.2 further presents the transmission spectra obtained with and without anti-reflective layers ("AR" and "No AR") and shows that anti-reflective layers 5a, 5b also allow improvement of the optical quality.

### Examples

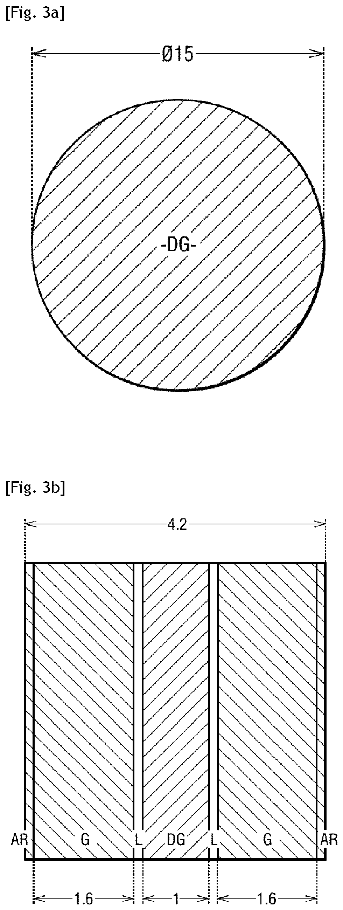

### Sample S1 (figures 3a and 3b)

An optical structure of 15 mm diameter has been tested, said optical structure comprising a central filter DG of doped glass sandwiched between two neutral optical elements G.

The doped central filter DG was of MTEOS based matrix doped with a mixture of PE2 and PE3 (PE2 50 mM, PE3 10 mM).

It presented a thickness of 1mm.

Neutral optical elements G were of pure silica, i.e. commercial fused silica glass (not the material of DG and not in a sol-gel material).

They presented a thickness of 1.6 mm.

They were adhered to filter DG through bonding layers L of EPO-TEK OG175 from EPOXY TECHNOLOGY INC., USA (said bonding layers being thus not made of a material with an MTEOS matrix, as is the case with the doped central filter).

Width of the optical structure obtained is 4.2 mm.

The silica glasses G were covered with anti-reflective layers AR on their external faces AR.

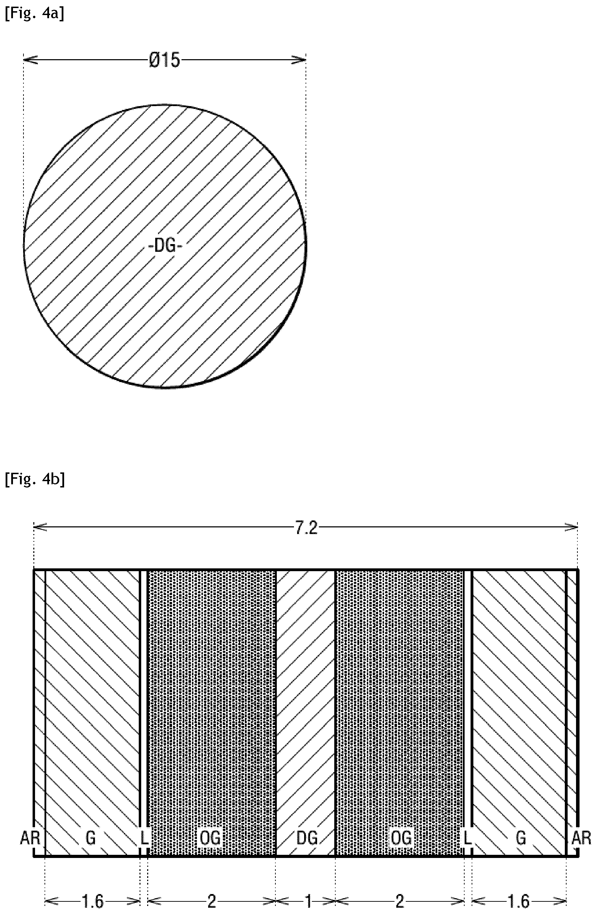

### Sample S2 (figures 4a and 4b)

Sample S2 has a central filter 1, DG made in the above-mentioned MTEOS based matrix doped by a doped material corresponding to those here-above mentioned (PE2 50 mM, PE3 10 mM), sandwiched between two neutral optical elements 2, 3, OG, which were of the same MTEOS based matrix as of the central filter DG but were undoped.

The optical elements OG are 2mm thick, whereas the central filter 1, DG is 1mm thick. The structure has 15 mm diameter.

Bonding between the central filter DG and the sandwiching optical elements OG has been achieved through the assembly process here above described using an adhesive material of the same MTEOS matrix as that of the central filter DG and of the sandwiching undoped optical elements OG.

The optical structure obtained has further been sandwiched between two commercial pure silica glasses G 1.6 mm thick) , i.e. commercial fused silica glass (not the material of DG and not in a sol-gel material). The silica glasses G were covered with anti-reflective layers AR on their external faces.

The bonding between glasses G and optical elements OG is realized through the same commercial adhesive material as that used for sample S1 (layers L).

### Reference sample R of a typical prior art limitation optical structure

The reference sample R of a typical prior art is the DG central filter of doped MTEOS based matrix doped with a mixture of PE2 and PE3 (PE2 50 mM, PE3 10 mM) but taken alone, which is 1mm thick and which is the same DG central filter as that of sample S2, i.e. the sample S2 without the optical elements OG, without the adhesive material L, without the two commercial pure silica glasses G and without the anti-reflective layers AR.

Transmission curves are provided on figure 5 for the three examples S1, S2 and R for low energy input, whereas figure 6 provides the transmitted energy versus the laser energy input for laser energy input reaching high values in abscissa for the three examples S1, S2 and R. In figure 5, the transmission curve UD of the commercial fused silica glass G (1,6 mm thick) taken alone, for low energy input is also shown.

Sample S2 has the best transmission curve, both samples S1 and S2 having a better transmission response than the reference sample R of typical prior art limitation optical structure (figure 5) in a transmission window of wavelengths of 450 nm to 650 nm, corresponding to visible light. The gain in the transmission curve (figure 5) is of several %, which may be required and important for some applications when combined with the decrease of transmitted energy according to figure 6.

From figure 6, the reference sample R allows a transmitted energy of 4-4.5 µJ, whereas samples S1 and S2 allow a transmitted energy of 3 - 3.5 µJ, at least from 0 to 100 J/cm² of energy input.

From figure 6, the transmitted energy at 50 J/cm² of samples S1 and S2 is lower than 3 µJ (equal to 2.1 - 2.7 µJ), while the transmitted energy at 50 J/cm² of the reference sample R is higher than 3.5 µJ (equal to 3.5 - 3.7 µJ). Thus, the samples S1 and S2 according to the invention advantageously provide a decrease of 25 % of transmitted energy of the optical structure, for a same incident laser energy of 50 J/cm², and thus have a protection threshold of transmitted energy (which can be defined by the absorbed energy from Figure 6) which is 25 % higher (and then better) than the reference sample R of prior art. The samples S1 and S2 thus improve significantly limitation of power transmission (see figure 6) in comparison to the reference sample R having only the central filter without the optical elements. The samples S1 and S2 also improve both the transmission of wavelengths of low energy in a transmission window of wavelengths (as shown from figure 5), and have a higher Laser Induced Damage Threshold in comparison to the reference sample R having only the central filter without the optical elements.

The Laser Induced Damage Threshold (LIDT) was tested at 532 nm wavelength, with pulses of 5.5 nanoseconds and with the focus in the middle of the samples (for every laser pulse the sample was moved).

The Laser Induced Damage Threshold for reference sample R of prior art is ~100 J/cm² and damage occurs at the front entrance, as also shown on Figure 6.

The Laser Induced Damage Threshold is around 160 - 190 J/cm² for sample S1 (damage in the commercial bonding layer L at the front).

The Laser Induced Damage Threshold is considerably improved (~250 J/cm²) with sample S2 using a bonding layer with the same sol-gel matrix as that of the central doped filter DG (see figure 6) (damage in the commercial bonding layer L at the front).

## Claims

1. Optical structure comprising at least one stack comprising a central filter (1) and two sandwiching optical elements (2,3) between which said central filter (1) is interposed, wherein said central filter (1) is in a matrix material, said matrix material being doped with at least one doping agent, the central filter (1) and the two optical elements (2,3) on either side thereof being assembled by bonding layers (4a, 4b) of a material based on the same matrix material as that of the central filter, the optical elements (2,3) on either side of the central filter (1) and the bonding layers (4a, 4b) each having a refractive index equal to that of the material of the central filter or only differing from this refractive index within a range of plus or minus 0.05, preferably within a range of plus or minus 0.02.

2. Optical structure according to claim 1, wherein the optical elements (2, 3) between which the central filter (1) is interposed are in an undoped material based on the same matrix material as that of the central filter (1).

3. Optical structure according to claim 1, wherein the optical elements between which the central filter is interposed are in an undoped material of fused silica glass.

4. Optical structure according to any of the preceding claims, wherein the matrix material of the central filter (1) and of the bonding layers (4a,4b) is selected within the following group of materials: methyltrimethoxysilane, MTMOS, methyltriethoxysilane ,MTEOS ethyttriethoxysitane, ETEOS, dimethyldimethoxysilane, DMDMOS, phenyltrimethoxysilane, PTMOS, dimethyldiethoxysilane, DMDEOS, (3-Glycidyloxypropyl)trimethoxysilane, GLYMO, (3-Glycidoxypropyl) methyldimethoxysilane, GLYDMO, 2-(3,4-Epoxycyclohexyl)ethyltrimethoxysilane, 2-(3,4-Epoxycyclohexyl)ethyl(methyl)dimethoxysilane, diethoxymethylsilane, HMDEOS, phenyltriethoxysilane, PTEOS, vinyltriethoxysilane, VTEOS, (3-Glycidyloxypropyl)trimethoxysilane, GLYEO, (3-Glycidoxypropyl) methyldiethoxysilane, GLYDEO, 2-(3,4-Epoxycyclohexyl) ethyl(methyl)diethoxysilane and 2-(3,4-Epoxycyclohexyl)ethyltriethoxysilane, and their mixtures, advantageously methyltriethoxysilane, MTEOS, ethyltriethoxysilane, ETEOS, and their mixtures.

5. Optical structure according to claim 4, wherein the matrix material of the bonding layers (4a, 4b) is methyltriethoxysilane, MTEOS, , with a concentration of methyltriethoxysilane, MTEOS, in its solvent higher than 80% in weight, advantageously between 82 to 90 % in weight.

6. Optical structure according to any one one of claims 1 to 5, wherein the doping agent is a visible and/or Near Infra-Red photochromic and/or optical power limiting agent.

7. Optical structure according to any of the preceding claims, wherein at least a front face of the structure is covered with an anti-reflective layer.

8. Optical structure according to any one of claims 1 to 7, wherein the stack comprising the central filter (1) and the two optical elements (2,3) between which said central filter (1) is interposed, is sandwiched between two silica glasses, among which at least the front glass is covered with anti-reflective layer.

9. Optical structure according to any of the preceding claims, wherein the central filter and the optical elements between which it is interposed are each between 0.5 mm and 10 mm thick, advantageously between 0.75 mm and 3 mm.

10. Optical structure according to any of the preceding claims, wherein the doping agent is such that the optical structure has a transmitted energy lower than 3 µJ for an energy input of 50 J/cm².

11. Optical structure according to any of the preceding claims, wherein the doping agent is such that the optical structure limits transmitted energy to lower than 3.5 µJ.

12. Optical structure according to any of the preceding claims, wherein the doping agent is such that the optical structure limits transmitted energy to lower than 3.5 µJ for an energy input of 0 to 100 J/cm².

13. Optical structure according to any of the preceding claims, wherein the doping agent has a doping concentration of 0.1 to 500 mM.

14. A method of manufacturing an optical structure according to any of the preceding claims, wherein the central filter and the two optical elements on either side thereof are bonded at a temperature between 45°C to 120°C, advantageously between 50 °C and 70 °C, and under a pressure of between 9.81 kPa (0.1 Kg/cm²) to 2,942 kPa (30 Kg/cm²), advantageously between 490.33 kPa (5 Kg/cm²) and 1,961.33 kPa (20 Kg/cm²).

15. A method according to claim 14, in which the central filter and the two optical elements on either side thereof are bonded using a temperature-regulating press.

## Patentansprüche

1. Optische Struktur mit mindestens einem Stapel, der ein zentrales Filter (1) und zwei sandwichartige optische Elemente (2, 3) umfasst, zwischen denen das zentrale Filter (1) eingefügt ist, wobei das zentrale Filter (1) in einem Matrixmaterial vorliegt, wobei das Matrixmaterial mit mindestens einem Dotiermittel dotiert ist, wobei das zentrale Filter (1) und die beiden optischen Elemente (2, 3) beiderseits davon durch Verbindungsschichten (4a, 4b) aus einem Material auf der Basis desselben Matrixmaterials wie das des zentralen Filters zusammengesetzt sind, wobei die optischen Elemente (2, 3) beiderseits des zentralen Filters (1) und die Verbindungsschichten (4a, 4b) jeweils einen Brechungsindex aufweisen, der gleich dem des Materials des zentralen Filters ist oder sich von diesem Brechungsindex nur in einem Bereich von plus oder minus 0,05, vorzugsweise innerhalb eines Bereichs von plus oder minus 0,02, von diesem Brechungsindex abweichen.

2. Optische Struktur nach Anspruch 1, wobei die optischen Elemente (2, 3), zwischen denen das zentrale Filter (1) eingefügt ist, aus einem undotierten Material bestehen, das auf demselben Matrixmaterial wie das des zentralen Filters (1) basiert.

3. Optische Struktur nach Anspruch 1, wobei die optischen Elemente, zwischen denen das zentrale Filter eingefügt ist, aus einem undotierten Material aus geschmolzenem Silikatglas bestehen.

4. Optische Struktur nach einem der vorhergehenden Ansprüche, wobei das Matrixmaterial des zentralen Filters (1) und der Verbindungsschichten (4a, 4b) aus der folgenden Gruppe von Materialien ausgewählt ist: Methyltrimethoxysilan, MTMOS, Methyltriethoxysilan, MTEOS, Ethyltriethoxysilan, ETEOS, Dimethyldimethoxysilan, DMDMOS, Phenyltrimethoxysilan, PTMOS, Dimethyldiethoxysilan, DMDEOS, (3-Glycidyloxypropyl)trimethoxysilan, GLYMO, (3-Glycidoxypropyl)methyldimethoxysilan, GLYDMO, 2-(3,4-Epoxycyclohexyl)ethyltrimethoxysilan, 2-(3,4-Epoxycyclohexyl)ethyl(methyl)dimethoxysilan, Diethoxymethylsilan, HMDEOS, Phenyltriethoxysilan, PTEOS, Vinyltriethoxysilan, VTEOS, (3-Glycidyloxypropyl)trimethoxysilan, GLYEO, (3-Glycidoxypropyl)methyldiethoxysilan, GLYDEO, 2-(3,4-Epoxycyclohexyl)ethyl(methyl)diethoxysilan und 2-(3,4-Epoxycyclohexyl)ethyltriethoxysilan und deren Mischungen, vorzugsweise Methyltriethoxysilan, MTEOS, Ethyltriethoxysilan, ETEOS, und deren Mischungen.

5. Optische Struktur nach Anspruch 4, wobei das Matrixmaterial der Verbindungsschichten (4a, 4b) Methyltriethoxysilan, MTEOS, ist, mit einer Konzentration von Methyltriethoxysilan, MTEOS, in seinem Lösungsmittel von mehr als 80 Gew.-%, vorteilhafterweise zwischen 82 und 90 Gew.-%.

6. Optische Struktur nach einem beliebigen der Ansprüche 1 bis 5, wobei das Dotiermittel ein sichtbares und/oder nahen Infrarotbereich photochromes und/oder die optische Leistung begrenzendes Mittel ist.

7. Optische Struktur nach einem der vorhergehenden Ansprüche, wobei mindestens eine Vorderseite der Struktur mit einer Antireflexionsschicht bedeckt ist.

8. Optische Struktur nach einem beliebigen der Ansprüche 1 bis 7, wobei der Stapel, der das zentrale Filter (1) und die beiden optischen Elemente (2, 3), zwischen denen das zentrale Filter (1) eingefügt ist, umfasst, zwischen zwei Silikatgläsern angeordnet ist, von denen zumindest das vordere Glas mit einer Antireflexionsschicht bedeckt ist.

9. Optische Struktur nach einem der vorhergehenden Ansprüche, wobei das zentrale Filter und die optischen Elemente, zwischen denen es eingefügt ist, jeweils zwischen 0,5 mm und 10 mm dick sind, vorteilhafterweise zwischen 0,75 mm und 3 mm.

10. Optische Struktur nach einem der vorhergehenden Ansprüche, wobei das Dotierungsmittel so beschaffen ist, dass die optische Struktur eine Transmissionsenergie von weniger als 3 µJ bei einem Energieeintrag von 50 J/cm² aufweist.

11. Optische Struktur nach einem der vorhergehenden Ansprüche, wobei das Dotierungsmittel so beschaffen ist, dass die optische Struktur die übertragene Energie auf weniger als 3,5 µJ begrenzt.

12. Optische Struktur nach einem der vorhergehenden Ansprüche, wobei das Dotierungsmittel so beschaffen ist, dass die optische Struktur die übertragene Energie auf weniger als 3,5 µJ für einen Energieeintrag von 0 bis 100 J/cm² begrenzt.

13. Optische Struktur nach einem der vorhergehenden Ansprüche, wobei das Dotierungsmittel eine Dotierungskonzentration von 0,1 bis 500 mM aufweist.

14. Verfahren zur Herstellung einer optischen Struktur nach einem der vorhergehenden Ansprüche, wobei das zentrale Filter und die beiden optischen Elemente auf jeder Seite davon bei einer Temperatur zwischen 45°C und 120°C, vorteilhafterweise zwischen 50°C und 70°C, und unter einem Druck zwischen 9,81 kPa (0,1 Kg/cm²) bis 2942 kPa (30 Kg/cm²), vorteilhafterweise zwischen 490,33 kPa (5 Kg/cm²) und 1961,33 kPa (20 Kg/cm²) verbunden sind.

15. Verfahren nach Anspruch 14, bei dem das zentrale Filter und die beiden optischen Elemente beiderseits davon mit einer temperaturregulierenden Presse verbunden werden.

## Revendications

1. Structure optique comprenant au moins un empilement comprenant un filtre central (1) et deux éléments optiques (2, 3) en sandwich entre lesquels ledit filtre central (1) est interposé, ledit filtre central (1) étant dans un matériau de matrice, ledit matériau de matrice étant dopé avec au moins un agent dopant, le filtre central (1) et les deux éléments optiques (2, 3) de part et d'autre de celui-ci étant assemblés par des couches de liaison (4a, 4b) d'un matériau basé sur le même matériau de matrice que celui du filtre central, les éléments optiques (2, 3) de part et d'autre du filtre central (1) et les couches de liaison (4a, 4b) ayant chacun un indice de réfraction égal à celui du matériau du filtre central ou ne différant de cet indice de réfraction que dans une fourchette de plus ou moins 0,05, de préférence dans une fourchette de plus ou moins 0,02.

2. Structure optique selon la revendication 1, dans laquelle les éléments optiques (2, 3) entre lesquels le filtre central (1) est interposé sont dans un matériau non dopé basé sur le même matériau de matrice que celui du filtre central (1).

3. Structure optique selon la revendication 1, dans laquelle les éléments optiques entre lesquels le filtre central est interposé sont dans un matériau non dopé de verre de silice fondu.

4. Structure optique selon l'une des revendications précédentes, dans laquelle le matériau de la matrice du filtre central (1) et des couches de liaison (4a, 4b) est choisi dans le groupe de matériaux suivant : méthyltriméthoxysilane, MTMOS, méthyltriéthoxysilane, MTEOS, éthyltriéthoxysilane, ETEOS, diméthyldiméthoxysilane, DMDMOS, phényltriméthoxysilane, PTMOS, diméthyldiéthoxysilane, DMDEOS, (3-Glycidyloxypropyl)triméthoxysilane, GLYMO, (3-Glycidoxypropyl) méthyldiméthoxysilane, GLYDMO, 2-(3,4-Epoxycyclohexyl)éthyltriméthoxysilane, 2-(3,4-Epoxycyclohexyl)éthyl(méthyl)diméthoxysilane, diéthoxyméthylsilane, HMDEOS, phényltriéthoxysilane, PTEOS, vinyltriéthoxysilane, VTEOS, (3-Glycidyloxypropyl)triméthoxysilane, GLYEO, (3-Glycidoxypropyl)méthyldiéthoxysilane, GLYDEO, 2-(3,4-Epoxycyclohexyl)éthyl(méthyl)diéthoxysilane et 2-(3,4-Epoxycyclohexyl)éthyltriéthoxysilane, et leurs mélanges, avantageusement le méthyltriéthoxysilane, MTEOS, l'éthyltriéthoxysilane, ETEOS, et leurs mélanges.

5. Structure optique selon la revendication 4, dans laquelle le matériau de matrice des couches de liaison (4a, 4b) est du méthyltriéthoxysilane, MTEOS, avec une concentration de méthyltriéthoxysilane, MTEOS, dans son solvant supérieure à 80 % en poids, avantageusement entre 82 et 90 % en poids.

6. Structure optique selon l'une quelconque des revendications 1 à 5, dans laquelle l'agent dopant est un agent photochromique visible et/ou infrarouge proche et/ou limitant la puissance optique.

7. Structure optique selon l'une des revendications précédentes, dans laquelle au moins une face avant de la structure est recouverte d'une couche antireflet.

8. Structure optique selon l'une quelconque des revendications 1 à 7, dans laquelle l'empilement comprenant le filtre central (1) et les deux éléments optiques (2, 3) entre lesquels ledit filtre central (1) est interposé, est pris en sandwich entre deux verres de silice, parmi lesquels au moins le verre avant est recouvert d'une couche antireflet.

9. Structure optique selon l'une des revendications précédentes, dans laquelle le filtre central et les éléments optiques entre lesquels il est interposé ont chacun une épaisseur comprise entre 0,5 mm et 10 mm, avantageusement entre 0,75 mm et 3 mm.

10. Structure optique selon l'une des revendications précédentes, dans laquelle l'agent dopant est tel que la structure optique a une énergie transmise inférieure à 3 µJ pour un apport d'énergie de 50 J/cm².

11. Structure optique selon l'une des revendications précédentes, dans laquelle l'agent dopant est tel que la structure optique limite l'énergie transmise à moins de 3,5 µJ.

12. Structure optique selon l'une des revendications précédentes, dans laquelle l'agent dopant est tel que la structure optique limite l'énergie transmise à moins de 3,5 µJ pour un apport d'énergie 0 à 100 J/cm².

13. Structure optique selon l'une des revendications précédentes, dans laquelle l'agent dopant a une concentration de dopage de 0,1 à 500 mM.

14. Procédé de fabrication d'une structure optique selon l'une des revendications précédentes, dans lequel le filtre central et les deux éléments optiques situés de part et d'autre de celui-ci sont collés à une température comprise entre 45°C et 120°C, avantageusement entre 50 °C et 70 °C, et sous une pression comprise entre 9,81 kPa (0,1 Kg/cm²) à 2 942 kPa (30 Kg/cm²), avantageusement entre 490,33 kPa (5 Kg/cm²) et 1 961,33 kPa (20 Kg/cm²).

15. Procédé selon la revendication 14, dans lequel le filtre central et les deux éléments optiques situés de part et d'autre de celui-ci sont collés à l'aide d'une presse à régulation de température.
